# FASCICULE DE BREVET EUROPEEN

(11) **EP 2 337 193 B1**
(45) Date de publication et mention de la délivrance du brevet: **17.04.2013**
(21) Numéro de dépôt: 10192314.2
(22) Date de dépôt: 24.11.2010
(51) Int. Cl.: H02K 35/02, G08C 17/00, H02K 7/18

(54) **Dispositif générateur d'énergie électrique et télécommande pourvue d'un tel dispositif**
Vorrichtung zur Stromerzeugung und Fernsteuerung für eine solche Vorrichtung
Power generation device and remote control for such a device

(30) Priorité: 04.12.2009 FR 0905865
(43) Date de publication de la demande: 22.06.2011
(73) Titulaire: Schneider Electric Industries SAS, 92500 Rueil-Malmaison (FR)
(72) Inventeur: Cartier Millon, Christophe, 38320, Bresson (FR); Vigouroux, Didier, 38190, Brignoud (FR)
(74) Mandataire: Bié, Nicolas

(56) Documents cités:
- DE-A1-102008 003 596
- DE-U1-202005 000 784
- DE-U1-202008 016 823
- US-A- 3 928 988
- US-A- 6 140 730
- US-A1- 2006 091 984
- US-A1- 2008 048 506

## Description

### DOMAINE TECHNIQUE DE L'INVENTION

L'invention relève du domaine des dispositifs générateur d'électricité et des télécommandes pourvues de tels dispositifs générateur pour alimenter électriquement des moyens de télécommande par la manoeuvre d'un organe de manoeuvre de ladite télécommande. L'invention est particulièrement adaptée aux télécommandes murales de petite taille, par exemple les télécommandes remplaçant les interrupteurs muraux classiques pour commander l'ouverture et la fermeture de moyens interrupteurs qui ont été déportés par rapport à ladite télécommande.

L'invention concerne en particulier un dispositif générateur d'énergie électrique comprenant :
- une première partie principale dans un matériau ferromagnétique formant au moins un circuit magnétique comportant un noyau et au moins une paire de branches couplées magnétiquement au dit noyau portant des extrémités de fermeture dudit au moins un circuit magnétique,
- une seconde partie principale comportant au moins un aimant permanent disposé pour fermer ledit circuit magnétique par déplacement relatif de ladite première partie principale par rapport à ladite seconde partie principale, ledit au moins un aimant permanent étant polarisé pour faire circuler un flux magnétique dans ledit circuit magnétique lorsque ledit circuit magnétique est fermé,
- un mécanisme de déplacement par rotation d'une partie mobile essentiellement constituée par l'une ou l'autre des dites parties principales autour d'un axe de rotation portant ledit noyau pour fermer ledit au moins un circuit magnétique, et
- une bobine électrique enroulée autour dudit noyau pour récupérer l'énergie électrique obtenue pendant la rotation de ladite partie mobile.

L'invention concerne également une télécommande pour commander à distance des moyens déportés, ladite télécommande comportant un organe de manoeuvre et un dispositif générateur d'énergie électrique pour alimenter ladite télécommande.

### ÉTAT DE LA TECHNIQUE

Le brevet américain US 6,140,730 décrit un générateur comprenant deux plateaux dans un matériau ferromagnétique pourvus d'une pluralités de bras, lesdits plateaux étant montés sur un axe autour duquel est enroulée une bobine électrique, ledit générateur comprenant en outre une partie mobile déplaçable en rotation autour dudit axe et pourvue d'un aimant permanent comportant plusieurs pôles. Dans ce générateur, l'aimant de la partie mobile est disposé par rapport aux bras desdits plateaux pour établir un champ magnétique à travers la bobine et dont l'intensité est variable en fonction de la rotation de ladite partie mobile. La variation de ce champ magnétique permet ainsi de générer aux bornes de la bobine une énergie électrique dépendant de la vitesse de variation dudit champ magnétique.

Un inconvénient de ce générateur est qu'il n'est pas adapté pour être activé au moyen d'un organe de manoeuvre d'une télécommande, en particulier un organe de manoeuvre pouvant occuper deux positions pour par exemple commander l'ouverture ou la fermeture d'un interrupteur.

Le document DE 10 2008 003596 décrit un dispositif permettant de convertir une énergie mécanique en énergie électrique en utilisant notamment une structure monostable pivotante autour d'un axe de commande.

### EXPOSÉ DE L'INVENTION

L'invention vise à remédier aux inconvénients des dispositifs générateurs d'électricité de l'art antérieur en proposant un dispositif générateur d'énergie électrique comprenant :
- une première partie principale dans un matériau ferromagnétique formant au moins un circuit magnétique comportant un noyau et au moins une paire de branches couplées magnétiquement au dit noyau portant des extrémités de fermeture dudit au moins un circuit magnétique,
- une seconde partie principale comportant au moins un aimant permanent disposé pour fermer ledit circuit magnétique par déplacement relatif de ladite première partie principale par rapport à ladite seconde partie principale, ledit au moins un aimant permanent étant polarisé pour faire circuler un flux magnétique dans ledit circuit magnétique lorsque ledit circuit magnétique est fermé,

- un mécanisme de déplacement par rotation d'une partie mobile essentiellement constituée par l'une ou l'autre des dites parties principales autour d'un axe de rotation portant ledit noyau pour fermer ledit au moins un circuit magnétique, et
- une bobine électrique enroulée autour dudit noyau pour récupérer l'énergie électrique obtenue pendant la rotation de ladite partie mobile,

ledit dispositif étant **caractérisé en ce que** ledit mécanisme de déplacement comprend des moyens de commande et des moyens d'armement et d'entraînement couplés aux dits moyens de commande pour établir un armement dudit mécanisme en accumulant une énergie d'armement générée par au moins une partie de la course desdits moyens de commande, lesdits moyens d'armement et d'entraînement coopérant avec ladite partie mobile pour l'entraîner entre deux positions stables en libérant ladite énergie d'armement en fin de course desdits moyens de commande.

De préférence, la première partie principale comporte une première paire de branches et une secondes paires de branches formant respectivement un premier circuit magnétique et un second circuit magnétique, et en ce que la seconde partie principale comporte un premier groupe d'au moins deux aimants permanents disposés pour fermer respectivement ledit premier et ledit second circuit magnétique dans une première position stable de la partie mobile, lesdits aimants permanents dudit premier groupe étant polarisés pour augmenter le flux magnétique dans le noyau dans ladite première position stable de la partie mobile. Avantageusement, les branches de la première paire de branche et les branches de la seconde paire de branches sont montées fixement sur le noyau et s'étendent radialement dans des directions sensiblement opposées par rapport à l'axe de rotation. Avantageusement, la seconde partie principale comporte un second groupe d'au moins deux aimants permanents disposés pour fermer respectivement ledit premier et ledit second circuit magnétique dans une seconde position stable de la partie mobile, lesdits aimants permanents dudit second groupe étant polarisés pour augmenter et inverser le flux magnétique dans le noyau dans ladite seconde position stable de la partie mobile.

Selon un mode de réalisation, la partie mobile est essentiellement constituée par la première partie principale. De préférence, les moyens d'armement et d'entraînement comprennent un premier flasque et un second flasque montés rotatifs autour de l'axe de rotation, ledit premier flasque coopérant avec au moins une branche d'entraînement de la première paire de branches de ladite partie mobile pour entraîner en rotation ladite partie mobile dans une première direction, ledit second flasque coopérant avec au moins une branche d'entraînement de la seconde paire de branches de ladite partie mobile pour entraîner en rotation ladite partie mobile dans une seconde direction opposée à ladite première direction. Avantageusement, le premier flasque et le second flasque comportent un épaulement pourvu d'une face d'appui coopérant avec un bord de la branche d'entraînement de respectivement la première paire de branches et la seconde paire de branches.

De préférence, les moyens de commande comprennent un bras d'armement monté solidairement sur chaque flasque et s'étendant radialement par rapport à l'axe de rotation. Avantageusement, le bras d'armement du premier flasque et le bras d'armement du second flasque sont conçus pour entraîner en rotation respectivement le premier flasque dans la seconde direction et le second flasque dans la première direction.

Selon un mode de réalisation, le dispositif comprend, en outre :
- des moyens d'accumulation d'énergie coopérant avec lesdits moyens d'armement et d'entraînement pour emmagasiner l'énergie d'armement pendant l'armement du mécanisme de déplacement, et
- un verrou coopérant avec lesdits moyens d'armement et d'entraînement pour verrouiller la partie mobile pendant l'armement du mécanisme de déplacement et pour déverrouiller ladite partie mobile en fin de course des moyens de commande.
   De préférence, les moyens d'accumulation d'énergie comprennent un ressort monté entre les bras d'armement du premier et du second flasque.

De préférence, le verrou comprend un levier monté pivotant autour d'un axe de verrou, ledit levier comportant un premier et un second bras de verrou coopérant avec un bras d'ancrage respectivement du premier et du second flasque pour bloquer respectivement le premier flasque ou le second flasque pendant la course du bras d'armement respectivement du second flasque ou du premier flasque, et pour débloquer respectivement le premier flasque ou le second flasque en fin de course dudit bras d'armement respectivement du second flasque ou du premier flasque. Avantageusement, le premier et le second bras de verrou comportent chacun :
- une face de glissement s'étendant d'une extrémité libre dudit bras de verrou vers l'axe de verrou, ladite face de glissement coopérant avec l'extrémité du bras d'ancrage respectivement du premier ou du second flasque pour maintenir le verrou dans une position permettant le blocage du bras d'ancrage respectivement du second ou du premier flasque, et
- une encoche disposée entre ladite face de glissement et l'axe de verrou, ladite encoche coopérant avec l'extrémité du bras d'ancrage respectivement du premier ou du second flasque pour bloquer ledit bras d'ancrage et pour basculer ledit verrou dans une position permettant le déblocage du bras d'ancrage respectivement du second ou du premier flasque.

L'invention concerne également, une télécommande pour commander à distance des moyens déportés, ladite télécommande comportant un organe de manoeuvre et un dispositif générateur d'énergie électrique pour alimenter ladite télécommande, **caractérisé en ce que** le dispositif générateur est tel que décrit précédemment, ledit dispositif comportant des moyens de commande couplés au dit organe de manoeuvre.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 est une vue en perspective d'un mode de réalisation du dispositif générateur selon l'invention.
La figure 2 est une vue en perspective selon un angle différent du dispositif générateur représenté à la figure 1.
La figure 3 est une vue éclatée du dispositif générateur représenté à la figure 1.
La figure 4 est une vue partielle de dessus du dispositif générateur de la figure 1 dans laquelle la partie mobile occupe une première position stable.
La figure 5 est une vue partielle de dessus du dispositif générateur de la figure 1 dans laquelle la partie mobile occupe une seconde position stable.
La figure 6 est une vue en perspective d'une télécommande comportant le dispositif générateur représenté à la figure 1.
La figure 7 correspond à la vue en perspective représentée à la figure 6 dans laquelle l'organe de manoeuvre de la télécommande a été légèrement décalé par rapport au dispositif générateur.

### DESCRIPTION DETAILLEE D'UN MODE DE RÉALISATION

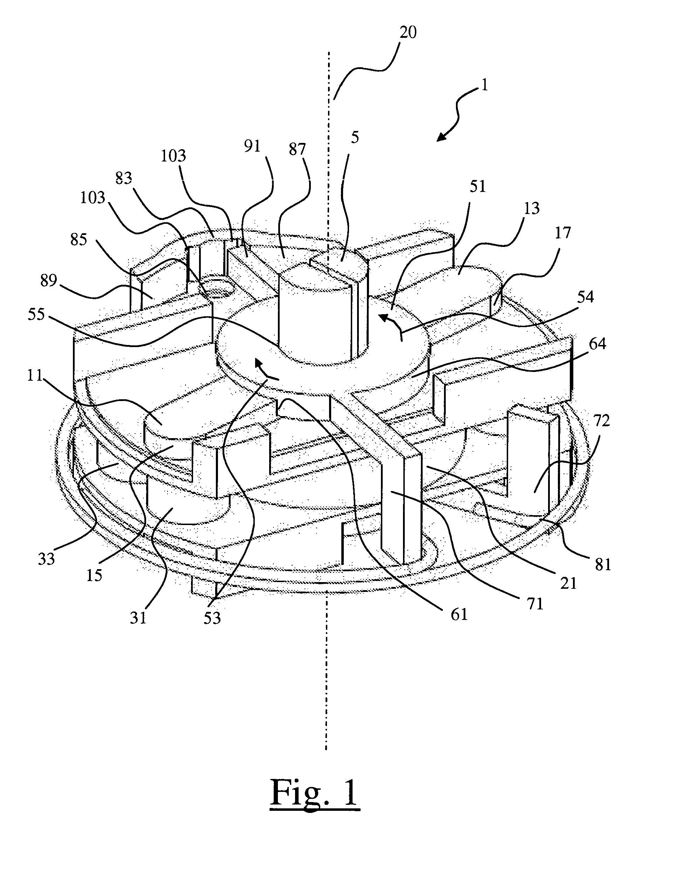

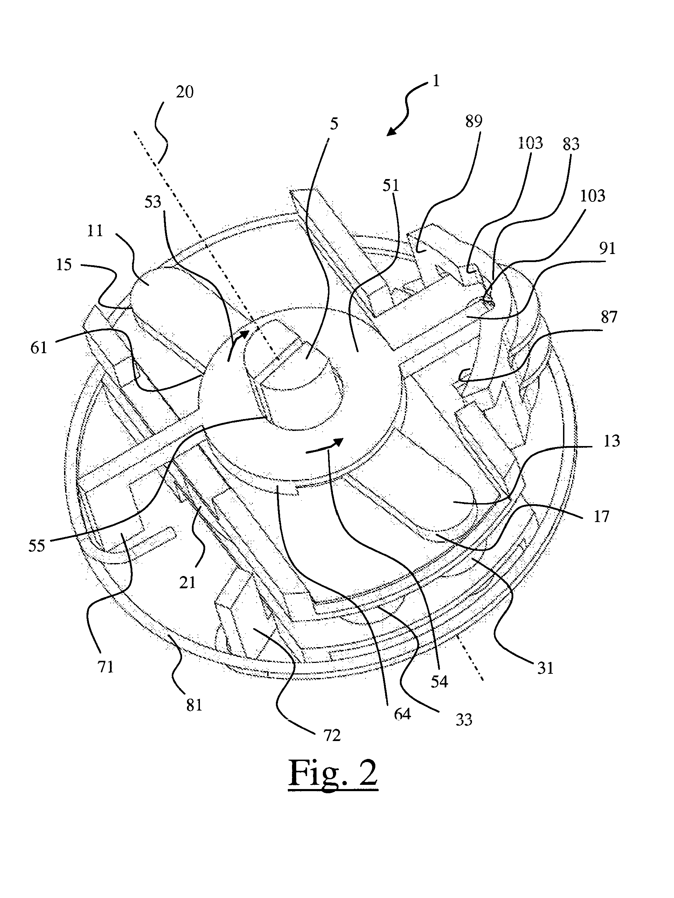

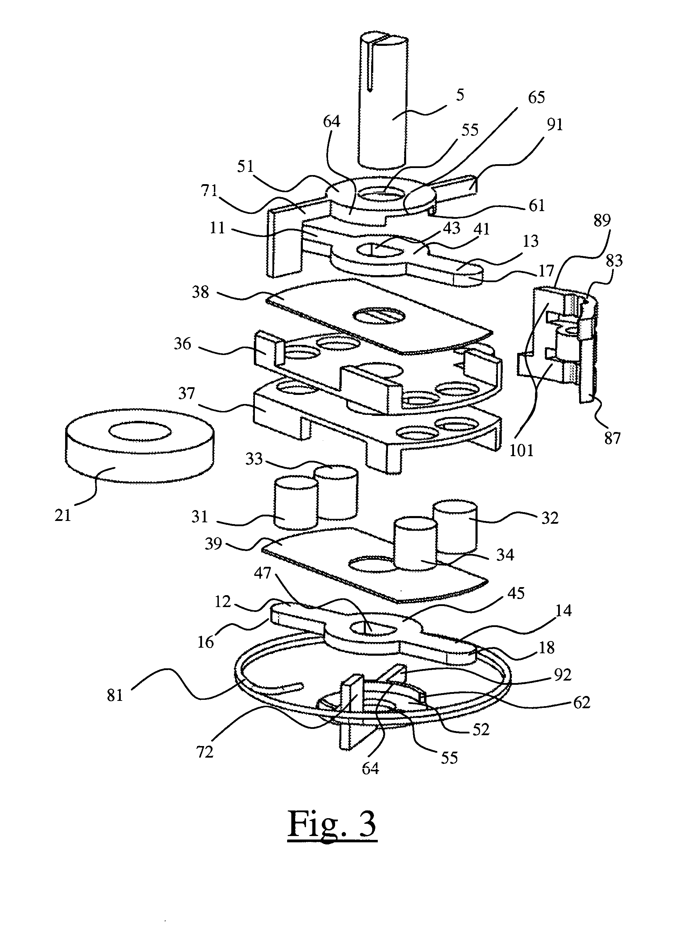

En référence aux figures 1 à 3, le dispositif générateur d'énergie électrique 1 comprend une première partie principale dans un matériau ferromagnétique comportant un noyau 5, une première paire de branches 11, 12 et une seconde paire de branches 13, 14. Une extrémité des dites branches est fixée au noyau 5, de façon à obtenir un couplage magnétique entre lesdites branches et ledit noyau. Sur les figures 1 et 2, seules les branches supérieures 11, 13 de chaque paire sont visibles. Les branches inférieures 12, 14 de chaque paire sont quant à elle visibles à la figure 3. Les branches 11, 12 de la première paire de branches sont disposées par rapport au noyau 5 pour former un premier circuit magnétique comportant des extrémités de fermeture 15, 16 disposées à l'extrémité libre des dites branches. De la même façon, les branches 13, 14 de la seconde paire de branches sont disposées par rapport au noyau 5 pour former un second circuit magnétique comportant des extrémités de fermeture 17, 18 disposées à l'extrémité libre des dites branches. Ainsi, le noyau 5 est commun au premier et au second circuit magnétique.

La fermeture du premier et/ou du second circuit magnétique peut être réalisée à l'aide d'aimants permanents en les disposant entre les extrémités de fermeture 15, 16, 17, 18 d'une paire de branches 11, 12, 13, 14. Ces aimants permanents constituent une seconde partie principale du dispositif générateur qui est décrite de manière plus détaillée plus loin. Lorsque ces aimants permanents sont polarisés pour créer un champ magnétique entre les extrémités de fermeture 15, 16, 17, 18 du premier et/ou du second circuit magnétique, un flux magnétique circule dans le noyau 5. La génération d'électricité est donc réalisée par un déplacement relatif des circuits magnétiques par rapport à ces aimants permanents pour venir fermer le premier et/ou le second circuit magnétique. Ce déplacement relatif permet de faire varier le flux magnétique circulant dans le noyau 5. Une bobine 21 en cuivre enroulée autour d'une carcasse plastique disposée autour du noyau 5 permet de récupérer l'énergie électrique obtenue par variation du flux magnétique dans le noyau.

Le dispositif générateur d'électricité 1 comprend donc un mécanisme de déplacement d'une partie mobile pour fermer le premier et/ou le second circuit magnétique. Dans le mode de réalisation représenté, cette partie mobile est essentiellement constituée par la première partie principale, c'est-à-dire le noyau 5 et les branches 11, 12, 13, 14 couplées magnétiquement au dit noyau. Ce déplacement de la partie mobile est, en l'occurrence, une rotation autour d'un axe de rotation 20 portant le noyau 5.

Dans le mode de réalisation représenté sur les figures 1 à 3, le dispositif générateur d'énergie électrique 1 comprend la seconde partie principale, mentionnée précédemment, ladite seconde partie principale comportant un premier groupe d'aimants et un second groupe d'aimants pour fermer le premier et le second circuit magnétique dans respectivement une première position stable et une seconde position stable de la partie mobile 5, 11, 12, 13, 14. Le premier groupe d'aimants comporte deux aimants permanents 31, 32 qui sont disposés pour fermer respectivement le premier et le second circuit magnétique dans une première position stable de la partie mobile. Les aimants permanents 31, 32 de ce premier groupe d'aimants sont polarisés pour augmenter le flux magnétique dans le noyau dans la première position stable de la partie mobile. En l'occurrence, les aimants permanents 31, 32 du premier groupe d'aimants sont polarisés dans le même sens ce qui permet, lorsque la partie mobile est dans la première position stable, de doubler le flux magnétique dans le noyau 5. Le second groupe d'aimants comporte également deux aimants permanents 33, 34 qui sont disposés pour fermer respectivement le premier et le second circuit magnétique dans une seconde position stable de la partie mobile. Les aimants permanents 33, 34 du second groupe d'aimants sont polarisés pour non seulement augmenter, mais également inverser, le flux magnétique dans le noyau dans la seconde position stable de la partie mobile. En l'occurrence, les aimants permanents 33, 34 du second groupe d'aimants sont polarisés dans un même sens, ce sens étant opposé par rapport au sens de polarisation des aimants 31, 32 du premier groupe d'aimants. Cette configuration permet, lorsque la partie mobile est dans la seconde position stable, de doubler le flux magnétique dans le noyau 5 par rapport à un flux magnétique généré par un seul aimant et d'inverser ce flux magnétique dans le noyau 5 par rapport à celui obtenu dans la première position stable de la partie mobile. Grâce à cette disposition des aimants permanents 31, 32, 33, 34 de la seconde partie principale, le passage entre la première et la seconde position stable de la partie mobile, dans un sens ou dans l'autre, s'accompagne d'une inversion du flux magnétique résultant à une variation dudit flux sensiblement égale à quatre fois le flux magnétique généré par l'un des aimants permanents. La quantité d'énergie électrique générée dans la bobine électrique 21 s'en trouve donc augmentée de la même façon.

Dans le mode de réalisation représenté sur les figures 1 à 3, les aimants permanents 31, 32, 33, 34 sont logés dans les ouvertures d'une carcasse en plastique formée par deux plateaux 36, 37. La bobine 21 et sa carcasse en plastique est intercalée entre ces deux plateaux 36, 37 et disposée autour du noyau 5. Deux feuilles 38, 39 en matière plastique ou autre matière non magnétique permettent de protéger les aimants permanents 31, 32, 33, 34 et forment des surfaces d'entrefer entre lesdits aimants et les extrémités de fermeture 15, 16 17, 18 des branches 11, 12, 13, 14 formant avec le noyau 5 les deux circuits magnétiques décrits précédemment.

Dans le mode de réalisation représenté sur les figures 1 à 3, les branches 11, 12 de la première paire de branches et les branches 13, 14 de la seconde paire de branches sont montées fixement sur le noyau 5 et s'étendent radialement dans des directions sensiblement opposées par rapport à l'axe de rotation 20. Cette disposition des branches 11, 12, 13, 14 permet de réduire l'encombrement du dispositif générateur, notamment ses dimensions selon un axe parallèle à l'axe de rotation 20.

Comme cela est visible sur la figure 3, les branches supérieures 11, 13 de chaque paire de branches sont formées dans une seule pièce 41 comprenant une ouverture 43 permettant d'emmancher ladite pièce 41 dans le noyau 5. De la même façon les branches inférieures 12, 14 de chaque paire de branches sont formées dans une seule pièce 45 comprenant une ouverture 47 permettant d'emmancher ladite pièce 45 dans le noyau 5. Les pièces 41, 45 peuvent être qualifiées de palettes. La section du noyau 5 coïncide avec la forme des ouvertures 43, 47 pour permettre de solidariser les branches 11, 12, 13, 14 au dit noyau. Avantageusement, les sections du noyau 5 et des ouvertures 43, 47 présentent une rupture de symétrie de révolution autour de l'axe 20 de façon à assurer un entraînement simultané en rotation de toutes les branches 11, 12, 13, 14. Le noyau 5 et les pièces 41, 45 constituent la partie mobile du dispositif générateur 1. Les branches d'une même paire de branches s'étendent selon des directions sensiblement parallèles et sont sensiblement de même longueur pour que les extrémités de fermeture des dites branches soient en vis-à-vis. De cette façon le premier et le second circuit magnétique formés par le noyau 5 et respectivement la première et la seconde paire de branches peuvent être fermés en intercalant un aimant permanent entre les extrémités de fermeture de chaque paire de branches.

Dans le mode de réalisation présenté, la partie mobile est essentiellement constituée par la première partie principale, c'est-à-dire en l'occurrence par les circuits magnétiques formés par les branches 11, 12, 13, 14 et le noyau 5. Dans d'autres modes de réalisation non représentés, la partie mobile pourrait être essentiellement constituée par la seconde partie principale, c'est-à-dire par les aimants permanents destinés à venir fermer les circuits magnétiques de la première partie principale.

Pour déplacer la partie mobile entre la première et la seconde position stable, le dispositif générateur 1 comporte un mécanisme de déplacement par rotation de la partie mobile 5, 11, 12, 13, 14 autour de l'axe de rotation 20. Le mécanisme de déplacement comprend des moyens de commande et des moyens d'armement et d'entraînement couplés aux dits moyens de commande pour établir un armement dudit mécanisme. Les moyens d'armement et d'entraînement coopèrent avec la partie mobile pour l'entraîner entre la première position stable et la seconde position stable, dans un sens ou dans l'autre.

Comme cela est visible sur les figures 1 à 3, les moyens d'armement et d'entraînement comprennent un premier flasque 51 et un second flasque 52 montés rotatifs autour de l'axe de rotation 20. Ces flasques peuvent également être qualifiés de flasques d'accrochage. Chaque flasque 51, 52 comporte une ouverture circulaire 55 pour être emmancher sur le noyau 5. La forme circulaire de l'ouverture 55 des flasques 51, 52 autorise une rotation desdits flasques autour du noyau dans un sens ou dans l'autre. Chaque flasque 51, 52 comporte une couronne 64 solidaire dudit flasque et disposée de façon coaxiale autour du noyau 5. Les bords de la couronne 64 s'étendent selon une direction parallèle à l'axe de rotation. Une échancrure 65 est ménagée sur les bords de la couronne 64 du premier et du second flasque 51, 52 pour recevoir respectivement une branche d'entraînement 11 de la première paire de branches 11, 12 et une branche d'entraînement 14 de la seconde paire de branches. Le premier flasque 51 coopère avec la branche d'entraînement 11 de la première paire de branches 11, 12 de la partie mobile pour entraîner en rotation ladite partie mobile dans une première direction 53. Le second flasque 52 coopère, quant à lui, avec la branche d'entraînement 14 de la seconde paire de branches de la partie mobile pour entraîner en rotation ladite partie mobile dans une seconde direction 54 opposée à la première direction 53. Plus précisément, le premier flasque 51 et le second flasque 52 comporte un épaulement 61, 62 formé par l'un des bords de l'échancrure 65 ménagée dans la couronne 64 desdits flasques, ledit épaulement étant pourvu d'une face d'appui s'étendant parallèlement à l'axe de rotation 20 et coopérant avec le bord de la branche d'entraînement 11, 14 de respectivement la première paire de branches 11, 12 et la seconde paire de branches 13, 14.

Comme cela est visible sur les figures 1 à 3, les moyens d'armement et d'entraînement sont couplés aux moyens de commande pour établir un armement dudit mécanisme. Les moyens de commande comprennent un bras d'armement 71, 72 monté solidairement sur chaque flasque 51, 52 et s'étendant radialement par rapport à l'axe de rotation 20. Le bras d'armement 71 du premier flasque 51 et le bras d'armement 72 du second flasque 52 sont conçus pour entraîner en rotation respectivement le premier flasque 51 dans la seconde direction 54 et le second flasque 52 dans la première direction 53.

Le dispositif générateur 1 comporte des moyens d'accumulation d'énergie coopérant avec les moyens d'armement et d'entraînement 51, 52 pour emmagasiner l'énergie d'armement générée par la course ou le déplacement des moyens de commande 71, 72. Cette énergie d'armement est générée pendant au moins une partie de la course ou du déplacement des moyens de commande 71, 72. En l'occurrence, les moyens d'accumulation d'énergie comprennent un ressort 81 monté entre les bras d'armement 71, 72 du premier et du second flasque 51, 52.

Le dispositif générateur 1 comporte un verrou 83 coopérant avec les moyens d'armement et d'entraînement 51, 52 pour verrouiller la partie mobile 5, 11, 12, 13, 14 pendant l'armement du mécanisme de déplacement et pour déverrouiller ladite partie mobile en fin de course ou de déplacement des moyens de commande 71, 72. Plus précisément, le verrou 83 comprend un levier monté pivotant autour d'un axe de verrou 85 parallèle et déporté par rapport à l'axe de rotation 20, ledit levier comportant un premier bras de verrou 87 et un second bras de verrou 89 coopérant avec un bras d'ancrage 91, 92 respectivement du premier et du second flasque 51, 52. Pendant l'armement, c'est-à-dire pendant au moins une partie de la course ou le déplacement du bras d'armement 72, 71 respectivement du second flasque 52 ou du premier flasque 51, le verrou 83 permet de bloquer respectivement le premier flasque 51 ou le second flasque 52. En fin de course ou de déplacement du bras d'armement 72, 71 respectivement du second flasque 52 ou du premier flasque 51, le verrou 83 permet de débloquer respectivement le premier flasque 51 ou le second flasque 52. Il s'en suit que l'énergie d'armement accumulée par le ressort 81 pendant l'armement est libérée et que le flasque débloqué peut entraîner, grâce à cette énergie, la partie mobile d'une position stable à l'autre.

Plus précisément, le premier et le second bras de verrou 87, 89 comportent chacun une face de glissement 101 s'étendant d'une extrémité libre dudit bras de verrou vers l'axe de verrou 85, ladite face de glissement 101 coopérant avec l'extrémité du bras d'ancrage 91, 92 respectivement du premier et du second flasque 51, 52 pour maintenir le verrou 83 dans une position permettant le blocage du bras d'ancrage 92, 91 respectivement du second ou du premier flasque 52, 51. Le premier et le second bras de verrou 87, 89 comportent chacun une encoche 103 disposée entre ladite face de glissement 101 et l'axe de verrou 85, ladite encoche 103 coopérant avec l'extrémité du bras d'ancrage 91, 92 respectivement du premier ou du second flasque 51, 52 pour bloquer ledit bras d'ancrage et pour basculer le verrou 83 dans une position permettant le déblocage du bras d'ancrage 92, 91 respectivement du second ou du premier flasque 52, 51.

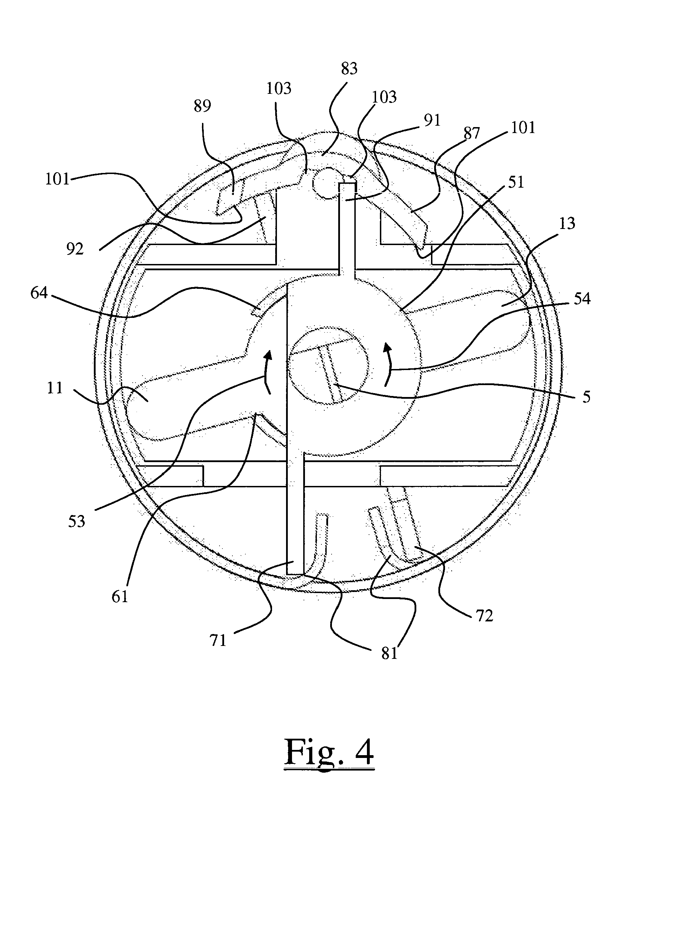

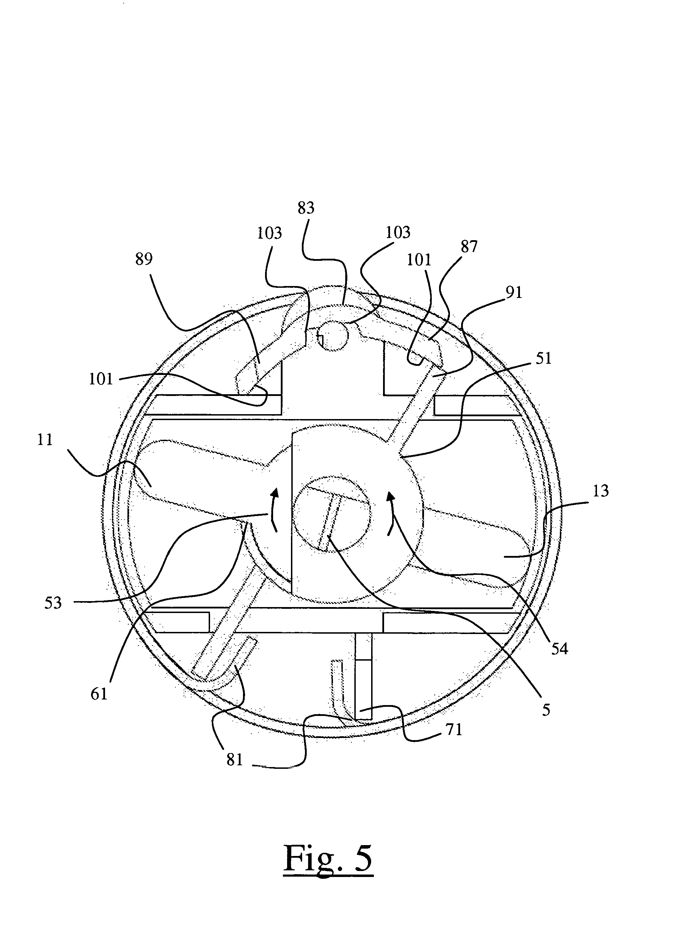

Le fonctionnement du dispositif générateur 1 est détaillé dans ce qui suit en référence aux figures 4 et 5. Sur ces figures, le flasque 51 du dispositif générateur a été légèrement tronqué pour bien montrer la couronne 64 dudit flasque 51 et l'épaulement 61 permettant d'entraîner en rotation la branche d'entraînement 11, et donc la partie mobile 5, 11, 12, 13, 14, dans la première direction 53.

Initialement, la partie mobile 5, 11, 12, 13, 14 du dispositif générateur est dans une première position stable représentée à la figure 4. Dans cette première position stable, les extrémités de fermetures 15, 16, 17, 18 des branches 11, 12, 13, 14 sont fermés par les aimants permanents 31, 32 polarisés dans le même sens. De cette façon, le flux magnétique traversant le noyau, et donc la bobine électrique 21, est sensiblement égale à deux fois le flux magnétique généré par chaque aimant.

Le bras d'armement 72 du second flasque 52 est dans un premier temps déplacé pour entraîner en rotation le flasque 52 dans la direction 53. Seuls le bras d'armement 72 et le bras d'ancrage 92 de ce second flasque 52 sont visibles sur les figures 4 et 5. Cet entraînement en rotation dans la direction 53 peut être réalisé au moyen d'un organe de manoeuvre coopérant avec les bras d'armement 72.

Cet entraînement en rotation du second flasque 52 dans la direction 53 ne s'accompagne pas d'une rotation de la partie mobile 5, 11, 12, 13, 14. En effet, l'échancrure ménagée dans la couronne 64 du second flasque 52 pour recevoir la branche d'entraînement 14 de la partie mobile est plus large que ladite branche de la même façon que l'échancrure ménagée dans la couronne 64 du premier flasque 51 pour recevoir la branche d'entraînement 11 de la partie mobile est plus large que ladite branche 11. De plus, l'épaulement 62 du second flasque 52 est en appui sur un bord de la branche d'entraînement 14 ne permettant qu'une rotation dans une direction 54 opposée à la direction 53. Ainsi, le second flasque 52 ne peut pas entraîner la partie mobile dans la direction 53, et ladite partie mobile reste donc dans la première position stable.

Parallèlement, la rotation du second flasque 52 dans la direction 53 s'accompagne de la rotation du bras d'ancrage 92 solidaire dudit flasque 52. Il s'ensuit que l'extrémité du bras d'ancrage 92 glisse le long de la face de glissement 101 du second bras de verrou 89, ce qui permet de maintenir le verrou 83 dans une position permettant le blocage du bras d'ancrage 91 du premier flasque 51. Le bras d'ancrage 91 du premier flaque 51 est donc bloqué et la rotation dudit premier flasque est entravée.

Pendant, toute la course du bras d'armement 72 du second flasque 52 dans la direction 53, ledit bras d'armement est amené vers le bras d'armement 71 du premier flasque 51, et le ressort 81 disposé entre les extrémités des deux bras d'armement est progressivement bandé.

Comme cela est visible sur la figure 5, en fin de course du bras d'armement 72, l'extrémité du bras d'ancrage 92 vient s'engager dans l'encoche 103 du second bras de verrou 89, ce qui permet de bloquer ledit bras d'ancrage. Parallèlement le verrou 83 bascule dans une position permettant le déblocage du bras d'ancrage 91 du premier flasque 51. Il s'ensuit que la rotation du premier flasque 51 n'est plus entravée et que le ressort 81 va pouvoir libérer son énergie en entraînant le premier flasque 51 en rotation dans la direction 53. Cet entraînement en rotation du premier flasque 51 dans la direction 53 s'accompagne d'une rotation brusque de la partie mobile 5, 11, 12, 13, 14 dans la même direction. En effet, l'épaulement 61 du premier flasque 51 qui est en appui sur un bord de la branche d'entraînement 11 va permettre l'entraînement de la partie mobile dans la seconde position stable.

Dans cette seconde position stable de la partie mobile 5, 11, 12, 13, 14, les extrémités de fermetures 15, 16, 17, 18 des branches 11, 12, 13, 14 sont fermés par les aimants permanents 33, 34 polarisés dans le même sens mais dans une direction opposé par rapport aux aimants 31, 32. De cette façon, le flux magnétique traversant le noyau, et donc la bobine électrique 21, est sensiblement égal à deux fois le flux magnétique généré par chaque aimant mais est orienté dans le sens opposé. L'énergie électrique générée par la bobine 21 étant proportionnelle à la vitesse de variation du flux magnétique dans le noyau, cette énergie s'en trouve accrue grâce à la rotation brusque de la partie mobile de la première position stable vers la seconde position stable.

Le dispositif générateur 1 fonctionne de la même façon pour passer de la seconde position stable représentée à la figure 5 à la première position stable représentée à la figure 4. Ainsi, le dispositif générateur 1 est réversible, c'est à dire qu'il permet la génération d'une même quantité d'énergie lors de la commande des moyens de commande 71, 72 dans un sens ou dans l'autre. Il suffit dans ce cas de déplacer le bras d'armement 71 du premier flasque 51 pour entraîner en rotation ledit flasque 51 dans la direction 54. Cette rotation du premier flasque 51 s'accompagne de la rotation du bras d'ancrage 91 solidaire dudit flasque dont l'extrémité glisse le long de la face de glissement 101 du premier bras de verrou 87. Il s'ensuit que le verrou 83 est maintenu dans une position permettant le blocage du bras d'ancrage 92 du second flasque 52. Pendant, toute la course du bras d'armement 71 du premier flasque 51 dans la direction 54, ledit bras d'armement est amené vers le bras d'armement 72 du second flasque 52, et le ressort 81 disposé entre les extrémités des deux bras d'armement est progressivement bandé. En fin de course du bras d'armement 71, l'extrémité du bras d'ancrage 91 vient s'engager dans l'encoche 103 du premier bras de verrou 87, ce qui permet de bloquer ledit bras d'ancrage. Parallèlement le verrou 83 bascule dans une position permettant le déblocage du bras d'ancrage 92 du second flasque 52. Il s'ensuit que le ressort 81 va pouvoir libérer son énergie en entraînant le second flasque 52 en rotation dans la direction 54. Cet entraînement en rotation du second flasque 52 dans la direction 54 s'accompagne d'une rotation brusque de la partie mobile 5, 11, 12, 13, 14 dans la même direction.

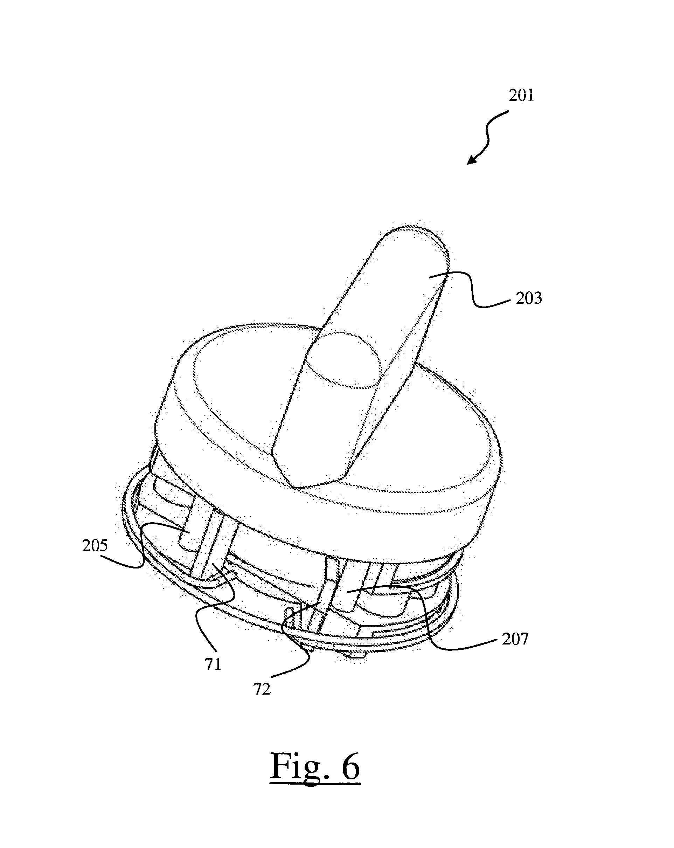

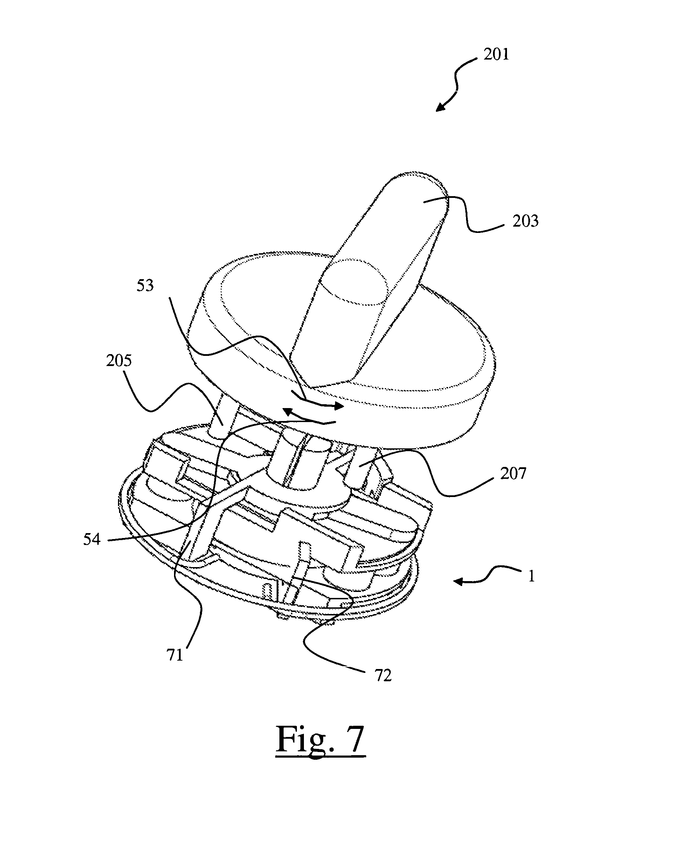

En référence aux figures 6 et 7, la télécommande 201 permet de commander à distance des moyens déportés non représentés, en l'occurrence des moyens comportant deux états de commande, tels qu'un interrupteur comportant une position d'ouverture et une position de fermeture. Pour cela la télécommande 201 comporte un organe de manoeuvre 203 permettant d'actionner à distance les moyens déportés dans l'un ou l'autre des états de commande. Afin d'alimenter les moyens de télécommande en énergie électrique, la télécommande 201 comporte un dispositif générateur 1 tel que décrit précédemment, ledit dispositif étant disposé au-dessous de l'organe de manouvre 203, comme cela est particulièrement bien visible sur la figure 7. Comme cela a été décrit précédemment, le dispositif générateur 1 comporte des moyens de commande constitué par deux bras d'armement 71, 72. Dans le mode de réalisation représenté, les moyens de commande 71, 72 du dispositif générateur sont couplés à l'organe de manoeuvre 203 par deux picots 205, 507. Comme cela est visible sur la figure 6, le picot 205 est en appui sur le bras d'armement 71 pour l'entraîner en rotation dans la direction 53. De la même façon, le picot 207 est en appui sur le bras d'armement 72 pour l'entraîner en rotation dans la direction opposée 54.

Le dispositif générateur et la télécommande selon l'invention permettent ainsi de générer une énergie électrique à partir du déplacement des moyens de commande ou de l'organe de manoeuvre couplés aux dits moyens de commande. Le dispositif générateur permet ainsi un fonctionnement autonome de la télécommande.

L'utilisation de deux circuits magnétiques présentant un noyau commun permet d'augmenter la valeur du flux magnétiques généré dans le noyau, et l'énergie électrique générée par variation dudit flux s'en trouve augmentée.

L'utilisation de deux paires d'aimants polarisés dans deux directions opposées pour fermer les circuits magnétiques dans respectivement deux positions stables de la partie mobile portant lesdits circuits permet d'augmenter la variation du flux magnétiques généré dans le noyau, et l'énergie électrique générée par variation dudit flux s'en trouve d'autant plus augmentée.

L'utilisation d'un mécanisme de déplacement de la partie mobile permettant d'obtenir un armement dudit mécanisme avec accumulation d'une énergie d'armement suivi par une libération brutale de cette énergie s'accompagne d'une augmentation de la vitesse de variation du flux magnétiques généré dans le noyau, et l'énergie électrique générée par variation dudit flux s'en trouve encore d'autant plus augmentée.

De surcroît, le dispositif générateur décrit précédemment présente un encombrement limité, notamment en ce qui concerne sa dimension selon l'axe de rotation, ce qui autorise sa mise en oeuvre dans des télécommandes de faible épaisseur, telles que des télécommandes murales de forme traditionnelle permettant d'ouvrir ou de fermer un interrupteur à distance. Le nombre de pièces utilisées dans le dispositif générateur est limité, ce qui facilite son assemblage et améliore considérablement sa fiabilité.

## Revendications

1. Dispositif générateur d'énergie électrique (1) comprenant :
- une première partie principale dans un matériau ferromagnétique formant au moins un circuit magnétique comportant un noyau (5) et au moins une paire de branches (11, 12, 13, 14) couplées magnétiquement au dit noyau portant des extrémités de fermeture (15, 16, 17, 18) dudit au moins un circuit magnétique,
- une seconde partie principale comportant au moins un aimant permanent (31, 32, 33, 34) disposé pour fermer ledit circuit magnétique par déplacement relatif de ladite première partie principale par rapport à ladite seconde partie principale, ledit au moins un aimant permanent étant polarisé pour faire circuler un flux magnétique dans ledit circuit magnétique lorsque ledit circuit magnétique est fermé,
- un mécanisme de déplacement par rotation d'une partie mobile essentiellement constituée par l'une ou l'autre des dites parties principales autour d'un axe de rotation (20) portant ledit noyau pour fermer ledit au moins un circuit magnétique, ledit mécanisme de déplacement comprenant des moyens de commande (71,72), et
- une bobine électrique (21) enroulée autour dudit noyau pour récupérer l'énergie électrique obtenue pendant la rotation de ladite partie mobile,
**caractérisé en ce que** ledit mécanisme de déplacement comprend en outre des moyens d'armement et d'entraînement (51, 52) couplés aux dits moyens de commande (71,72) pour établir un armement dudit mécanisme en accumulant une énergie d'armement générée par au moins une partie de la course desdits moyens de commande, lesdits moyens d'armement et d'entraînement coopérant avec ladite partie mobile pour l'entraîner entre deux positions stables en libérant ladite énergie d'armement en fin de course desdits moyens de commande.

2. Dispositif selon la revendication 1, **caractérisé en ce que** la première partie principale comporte une première paire de branches (11, 12) et une secondes paires de branches (13, 14) formant respectivement un premier circuit magnétique et un second circuit magnétique, et **en ce que** la seconde partie principale comporte un premier groupe d'au moins deux aimants permanents (31, 32) disposés pour fermer respectivement ledit premier et ledit second circuit magnétique dans une première position stable de la partie mobile, lesdits aimants permanents dudit premier groupe étant polarisés pour augmenter le flux magnétique dans le noyau (5) dans ladite première position stable de la partie mobile.

3. Dispositif selon la revendication 2, **caractérisé en ce que** les branches (11, 12) de la première paire de branche et les branches (13, 14) de la seconde paire de branches sont montées fixement sur le noyau (5) et s'étendent radialement dans des directions sensiblement opposées par rapport à l'axe de rotation (20).

4. Dispositif selon la revendication 3, **caractérisé en ce que** la seconde partie principale comporte un second groupe d'au moins deux aimants permanents (33, 34) disposés pour fermer respectivement ledit premier et ledit second circuit magnétique dans une seconde position stable de la partie mobile, lesdits aimants permanents dudit second groupe étant polarisés pour augmenter et inverser le flux magnétique dans le noyau (5) dans ladite seconde position stable de la partie mobile.

5. Dispositif l'une quelconque des revendications 1 à 4, **caractérisé en ce que** la partie mobile est essentiellement constituée par la première partie principale (5, 11, 12, 13, 14).

6. Dispositif selon la revendications 5, **caractérisé en ce que** les moyens d'armement et d'entraînement comprennent un premier flasque (51) et un second flasque (52) montés rotatifs autour de l'axe de rotation (20), ledit premier flasque coopérant avec au moins une branche d'entraînement (11) de la première paire de branches (11, 12) de ladite partie mobile pour entraîner en rotation ladite partie mobile dans une première direction (53), ledit second flasque coopérant avec au moins une branche d'entraînement (14) de la seconde paire de branches (13, 14) de ladite partie mobile pour entraîner en rotation ladite partie mobile dans une seconde direction (54) opposée à ladite première direction.

7. Dispositif selon la revendication 6, **caractérisé en ce que** le premier flasque (51) et le second flasque (52) comportent un épaulement (61, 62) pourvu d'une face d'appui coopérant avec un bord de la branche d'entraînement (11, 14) de respectivement la première paire de branches (11, 12) et la seconde paire de branches (13, 14).

8. Dispositif selon l'une quelconque des revendications 6 ou 7, **caractérisé en ce que** les moyens de commande comprennent un bras d'armement (71, 72) monté solidairement sur chaque flasque (51, 52) et s'étendant radialement par rapport à l'axe de rotation (20).

9. Dispositif selon la revendication 8, **caractérisé en ce que** le bras d'armement (71) du premier flasque (51) et le bras d'armement (72) du second flasque (52) sont conçus pour entraîner en rotation respectivement le premier flasque dans la seconde direction (54) et le second flasque dans la première direction (53).

10. Dispositif selon l'une quelconque des revendications 1 à 9, **caractérisé en ce qu'**il comprend, en outre :
- des moyens d'accumulation d'énergie coopérant avec lesdits moyens d'armement et d'entraînement (51, 52) pour emmagasiner l'énergie d'armement pendant l'armement du mécanisme de déplacement, et
- un verrou coopérant avec lesdits moyens d'armement et d'entraînement pour verrouiller la partie mobile (5, 11, 12, 13, 14) pendant l'armement du mécanisme de déplacement et pour déverrouiller ladite partie mobile en fin de course des moyens de commande (71, 72).

11. Dispositif selon la revendication 10, **caractérisé en ce que** les moyens d'accumulation d'énergie comprennent un ressort (81) monté entre les bras d'armement (71, 72) du premier et du second flasque (51, 52).

12. Dispositif selon l'une quelconque des revendications 10 ou 11, **caractérisé en ce que** le verrou comprend un levier (83) monté pivotant autour d'un axe de verrou (85), ledit levier comportant un premier et un second bras de verrou (87, 89) coopérant avec un bras d'ancrage (91, 92) respectivement du premier et du second flasque pour bloquer respectivement le premier flasque (51) ou le second flasque (52) pendant la course du bras d'armement (72, 71) respectivement du second flasque (52) ou du premier flasque (51), et pour débloquer respectivement le premier flasque (51) ou le second flasque (52) en fin de course dudit bras d'armement (72, 71) respectivement du second flasque (52) ou du premier flasque (51).

13. Dispositif selon la revendication 12, **caractérisé en ce que** le premier et le second bras de verrou (87, 89) comportent chacun :
- une face de glissement (101) s'étendant d'une extrémité libre dudit bras de verrou vers l'axe de verrou (85), ladite face de glissement coopérant avec l'extrémité du bras d'ancrage (91, 92) respectivement du premier ou du second flasque (51, 52) pour maintenir le verrou (83) dans une position permettant le blocage du bras d'ancrage (92, 91) respectivement du second ou du premier flasque (52, 51), et
- une encoche (103) disposée entre ladite face de glissement (101) et l'axe de verrou (85), ladite encoche coopérant avec l'extrémité du bras d'ancrage (91, 92) respectivement du premier ou du second flasque (51, 52) pour bloquer ledit bras d'ancrage et pour basculer ledit verrou (83) dans une position permettant le déblocage du bras d'ancrage (92, 91) respectivement du second ou du premier flasque (52, 51).

14. Télécommande (201) pour commander à distance des moyens déportés, ladite télécommande comportant un organe de manoeuvre (203) et un dispositif générateur d'énergie électrique (1) pour alimenter ladite télécommande, **caractérisé en ce que** le dispositif générateur est selon l'une quelconque des revendications précédentes, ledit dispositif comportant des moyens de commande (71, 72) couplés au dit organe de manoeuvre (203).

## Claims

1. Electric power-generating device (1) comprising:
- a first main portion made of a ferromagnetic material forming at least one magnetic circuit comprising a core (5) and at least one pair of branches (11, 12, 13, 14) magnetically coupled to the said core supporting closure ends (15, 16, 17, 18) of the said at least one magnetic circuit,
- a second main portion comprising at least one permanent magnet (31, 32, 33, 34) placed to close the said magnetic circuit by relative movement of the said first main portion relative to the said second main portion, the said at least one permanent magnet being polarized in order to have a magnetic flux flow in the said magnetic circuit when the said magnetic circuit is closed,
- a mechanism for movement by rotation of a movable portion consisting essentially of one or other of the said main portions about an axis of rotation (20) supporting the said core in order to close the said at least one magnetic circuit,
- the said movement mechanism comprising control means (71, 72), and
- an electric coil (21) wound around the said core in order to gather the electric power obtained while the said movable portion rotates,
**characterized in that** the said movement mechanism further comprises priming and driving means (51, 52) coupled to the said control means (71, 72) in order to establish a priming of the said mechanism by accumulating a priming power generated by at least one portion of the travel of the said control means, the said priming and driving means interacting with the said movable portion in order to drive it between two stable positions while releasing the said priming power at the end of travel of the said control means.

2. Device according to Claim 1, **characterized in that** the first main portion comprises a first pair of branches (11, 12) and a second pair of branches (13, 14) forming respectively a first magnetic circuit and a second magnetic circuit, and **in that** the second main portion comprises a first group of at least two permanent magnets (31, 32) placed in order to respectively close the said first and the said second magnetic circuit in a first stable position of the movable portion, the said permanent magnets of the said first group being polarized in order to increase the magnetic flux in the core (5) in the said first stable position of the movable portion.

3. Device according to Claim 2, **characterized in that** the branches (11, 12) of the first pair of branches and the branches (13, 14) of the second pair of branches are mounted fixedly on the core (5) and extend radially in directions substantially opposite to the axis of rotation (20).

4. Device according to Claim 3, **characterized in that** the second main portion comprises a second group of at least two permanent magnets (33, 34) placed in order to close respectively the said first and the said second magnetic circuit in a second stable position of the movable portion, the said permanent magnets of the said second group being polarized in order to increase and reverse the magnetic flux in the core (5) in the said second stable position of the movable portion.

5. Device according to any one of Claims 1 to 4, **characterized in that** the movable portion consists essentially of the first main portion (5, 11, 12, 13, 14).

6. Device according to Claim 5, **characterized in that** the priming and driving means comprise a first flange (51) and a second flange (52) mounted so as to rotate about the axis of rotation (20), the said first flange interacting with at least one driving branch (11) of the first pair of branches (11, 12) of the said movable portion in order to rotate the said movable portion in a first direction (53), the said second flange interacting with at least one driving branch (14) of the second pair of branches (13, 14) of the said movable portion in order to rotate the said movable portion in a second direction (54) opposite to the said first direction.

7. Device according to Claim 6, **characterized in that** the first flange (51) and the second flange (52) comprise a shoulder (61, 62) provided with a bearing face interacting with an edge of the driving branch (11, 14) of respectively the first pair of branches (11, 12) and the second pair of branches (13, 14).

8. Device according to either one of Claims 6 or 7, **characterized in that** the control means comprise a priming arm (71, 72) mounted securely on each flange (51, 52) and extending radially relative to the axis of rotation (20).

9. Device according to Claim 8, **characterized in that** the priming arm (71) of the first flange (51) and the priming arm (72) of the second flange (52) are designed in order to rotate respectively the first flange in the second direction (54) and the second flange in the first direction (53).

10. Device according to any one of Claims 1 to 9, **characterized in that** it also comprises:
- power-accumulation means interacting with the said priming and driving means (51, 52) in order to store the priming power while the movement mechanism is primed, and
- a lock interacting with the said priming and driving means in order to lock the movable portion (5, 11, 12, 13, 14) while the movement mechanism is primed and in order to unlock the said movable portion at the end of travel of the control means (71, 72).

11. Device according to Claim 10, **characterized in that** the power-accumulation means comprise a spring (81) mounted between the priming arm (71, 72) of the first and of the second flange (51, 52).

12. Device according to either one of Claims 10 or 11, **characterized in that** the lock comprises a lever (83) mounted so as to pivot about a lock spindle (85) the said lever comprising a first and a second lock arm (87, 89) interacting with an anchoring arm (91, 92) respectively of the first and of the second flange in order to immobilize respectively the first flange (51) or the second flange (52) during the travel of the priming arm (71, 72) respectively of the second flange (52) or of the first flange (51), and in order to release respectively the first flange (51) or the second flange (52) at the end of travel of the said priming arm (72, 71) respectively of the second flange (52) or of the first flange (51).

13. Device according to Claim 12, **characterized in that** the first and the second lock arms (87, 89) each comprise:
- a sliding face (101) extending from a free end of the said lock arm to the lock spindle (85), the said sliding face interacting with the end of the anchoring arm (91, 92) respectively of the first or of the second flange (51, 52) in order to hold the lock (83) in a position allowing the immobilization of the anchoring arm (92, 91) respectively of the second or of the first flange (52, 51), and
- a notch (103) placed between the said sliding face (101) and the lock spindle (85), the said notch interacting with the end of the anchoring arm (91, 92) respectively of the first or of the second flange (51, 52) in order to immobilize the said anchoring arm and in order to switch the said lock (83) into a position allowing the release of the anchoring arm (92, 91) respectively of the second or of the first flange (52, 51).

14. Remote control (201) for remotely controlling slaved means, the said remote control comprising an operating member (203) and an electric power-generating device (1) in order to supply the said remote control, **characterized in that** the generating device is according to one of the preceding claims, the said device comprising control means (71, 72) coupled to the said operating member (203).

## Patentansprüche

1. Vorrichtung zur Erzeugung elektrischer Energie (1), die Folgendes enthält:
- einen ersten Hauptteil aus einem ferromagnetischen Material, der mindestens einen Magnetkreis formt, der einen Kern (5) und mindestens ein Paar von Zweigen (11, 12, 13, 14) aufweist, die magnetisch mit dem Kern gekoppelt sind und Enden (15, 16, 17, 18) zum Schließen des mindestens einen Magnetkreises tragen,
- einen zweiten Hauptteil, der mindestens einen Dauermagnet (31, 32, 33, 34) aufweist, der angeordnet ist, um den Magnetkreis durch Verschiebung des ersten Hauptteils bezüglich des zweiten Hauptteils zu schließen, wobei der mindestens eine Dauermagnet polarisiert ist, um einen Magnetfluss im Magnetkreis fließen zu lassen, wenn der Magnetkreis geschlossen ist,
- einen Verschiebemechanismus durch Drehung eines hauptsächlich aus dem einen oder anderen der Hauptteile bestehenden beweglichen Teils um eine den Kern tragende Drehachse (20), um den mindestens einen Magnetkreis zu schließen, wobei der Verschiebemechanismus Steuereinrichtungen (71, 72) enthält, und
- eine Elektrospule (21), die um den Kern gewickelt ist, um die während der Drehung des beweglichen Teils erhaltene elektrische Energie aufzufangen,
**dadurch gekennzeichnet, dass** der Verschiebemechanismus außerdem Spann- und Antriebseinrichtungen (51, 52) enthält, die mit den Steuereinrichtungen (71, 72) gekoppelt sind, um ein Spannen des Mechanismus herzustellen, indem eine Spannenergie gesammelt wird, die von mindestens einem Teil des Hubs der Steuereinrichtungen erzeugt wird, wobei die Spann- und Antriebseinrichtungen mit dem beweglichen Teil zusammenwirken, um ihn zwischen zwei stabilen Stellungen anzutreiben, indem die Spannenergie am Ende des Hubs der Steuereinrichtungen freigesetzt wird.

2. Vorrichtung nach Anspruch 1, **dadurch gekennzeichnet, dass** der erste Hauptteil ein erstes Paar von Zweigen (11, 12) und ein zweites Paar von Zweigen (13, 14) aufweist, die einen ersten Magnetkreis bzw. einen zweiten Magnetkreis formen, und dass der zweite Hauptteil eine erste Gruppe von mindestens zwei Dauermagneten (31, 32) aufweist, die angeordnet sind, um den ersten bzw. den zweiten Magnetkreis in einer ersten stabilen Stellung des beweglichen Teils zu schließen, wobei die Dauermagnete der ersten Gruppe polarisiert sind, um den Magnetfluss im Kern (5) in der ersten stabilen Stellung des beweglichen Teils zu erhöhen.

3. Vorrichtung nach Anspruch 2, **dadurch gekennzeichnet, dass** die Zweige (11, 12) des ersten Paars von Zweigen und die Zweige (13, 14) des zweiten Paars von Zweigen ortsfest auf den Kern (5) montiert sind und sich radial in im Wesentlichen entgegengesetzte Richtungen bezüglich der Drehachse (20) erstrecken.

4. Vorrichtung nach Anspruch 3, **dadurch gekennzeichnet, dass** der zweite Hauptteil eine zweite Gruppe von mindestens zwei Dauermagneten (33, 34) aufweist, die angeordnet sind, um den ersten bzw. den zweiten Magnetkreis in einer zweiten stabilen Stellung des beweglichen Teils zu schließen, wobei die Dauermagnete der zweiten Gruppe polarisiert sind, um den Magnetfluss im Kern (5) in der zweiten stabilen Stellung des beweglichen Teils zu erhöhen und umzukehren.

5. Vorrichtung nach einem der Ansprüche 1 bis 4, **dadurch gekennzeichnet, dass** der bewegliche Teil hauptsächlich aus dem ersten Hauptteil (5, 11, 12, 13, 14) besteht.

6. Vorrichtung nach Anspruch 5, **dadurch gekennzeichnet, dass** die Spann- und Antriebseinrichtungen einen ersten Flansch (51) und einen zweiten Flansch (52) enthalten, die um die Drehachse (20) drehbar montiert sind, wobei der erste Flansch mit mindestens einem Antriebszweig (11) des ersten Paars von Zweigen (11, 12) des beweglichen Teils zusammenwirkt, um den beweglichen Teil in einer ersten Richtung (53) in Drehung zu versetzen, wobei der zweite Flansch mit mindestens einem Antriebszweig (14) des zweiten Paars von Zweigen (13, 14) des beweglichen Teils zusammenwirkt, um den beweglichen Teil in einer zweiten Richtung (54) entgegengesetzt zur ersten Richtung in Drehung zu versetzen.

7. Vorrichtung nach Anspruch 6, **dadurch gekennzeichnet, dass** der erste Flansch (51) und der zweite Flansch (52) eine Schulter (61, 62) aufweisen, die mit einer Auflageseite versehen ist, die mit einem Rand des Antriebszweigs (11, 14) des ersten Paars von Zweigen (11, 12) bzw. des zweiten Paars von Zweigen (13, 14) zusammenwirkt.

8. Vorrichtung nach einem der Ansprüche 6 oder 7, **dadurch gekennzeichnet, dass** die Steuereinrichtungen einen Spannarm (71, 72) enthalten, der auf jeden Flansch (51, 52) fest mit diesem verbunden montiert ist und sich radial bezüglich der Drehachse (20) erstreckt.

9. Vorrichtung nach Anspruch 8, **dadurch gekennzeichnet, dass** der Spannarm (71) des ersten Flanschs (51) und der Spannarm (72) des zweiten Flanschs (52) konzipiert sind, um den ersten Flansch in die zweite Richtung (54) bzw. den zweiten Flansch in die erste Richtung (53) in Drehung zu versetzen.

10. Vorrichtung nach einem der Ansprüche 1 bis 9, **dadurch gekennzeichnet, dass** sie außerdem Folgendes enthält:
- Energiesammeleinrichtungen, die mit den Spann- und Antriebseinrichtungen (51, 52) zusammenwirken, um die Spannenergie während des Spannens des Verschiebemechanismus zu speichern, und
- einen Riegel, der mit den Spann- und Antriebseinrichtungen zusammenwirkt, um den beweglichen Teil (5, 11, 12, 13, 14) während des Spannens des Verschiebemechanismus zu verriegeln und um den beweglichen Teil am Ende des Hubs der Steuereinrichtungen (71, 72) zu entriegeln.

11. Vorrichtung nach Anspruch 10, **dadurch gekennzeichnet, dass** die Energiesammeleinrichtungen eine Feder (81) enthalten, die zwischen die Spannarme (71, 72) des ersten und des zweiten Flanschs (51, 52) montiert ist.

12. Vorrichtung nach einem der Ansprüche 10 oder 11, **dadurch gekennzeichnet, dass** der Riegel einen Hebel (83) enthält, der um eine Riegelachse (85) schwenkbar montiert ist, wobei der Hebel einen ersten und einen zweiten Riegelarm (87, 89) aufweist, die mit einem Verankerungsarm (91, 92) des ersten bzw. des zweiten Flanschs zusammenwirken, um den ersten Flansch (51) bzw. den zweiten Flansch (52) während des Hubs des Spannarms (72, 71) des zweiten Flanschs (52) bzw. des ersten Flanschs (51) zu blockieren und um den ersten Flansch (51) bzw. den zweiten Flansch (52) am Ende des Hubs des Spannarms (72, 71) des zweiten Flanschs (52) bzw. des ersten Flanschs (51) zu lösen.

13. Vorrichtung nach Anspruch 12, **dadurch gekennzeichnet, dass** der erste und der zweite Riegelarm (87, 89) je Folgendes aufweisen:
- eine Gleitseite (101), die sich von einem freien Ende des Riegelarms zur Riegelachse (85) erstreckt, wobei die Gleitseite mit dem Ende des Verankerungsarms (91, 92) des ersten bzw. des zweiten Flanschs (51, 52) zusammenwirkt, um den Riegel (83) in einer Stellung zu halten, die das Blockieren des Verankerungsarms (92, 91) des zweiten bzw. des ersten Flanschs (52, 51) erlaubt, und
- eine Kerbe (103), die zwischen der Gleitseite (101) und der Riegelachse (85) angeordnet ist, wobei die Kerbe mit dem Ende des Verankerungsarms (91, 92) des ersten bzw. des zweiten Flanschs (51, 52) zusammenwirkt, um den Verankerungsarm zu blockieren und um den Riegel (83) in eine Stellung zu kippen, die das Lösen des Verankerungsarms (92, 91) des zweiten bzw. ersten Flanschs (52, 51) erlaubt.

14. Fernbedienung (201), um verlagerte Einrichtungen fernzusteuern, wobei die Fernbedienung ein Betätigungsorgan (203) und eine Vorrichtung zur Erzeugung elektrischer Energie (1) aufweist, um die Fernbedienung zu versorgen, **dadurch gekennzeichnet, dass** die Erzeugungsvorrichtung nach einem der vorhergehenden Ansprüche ist, wobei die Vorrichtung Steuereinrichtungen (71, 72) aufweist, die mit dem Betätigungsorgan (203) gekoppelt sind.
